# EUROPEAN PATENT SPECIFICATION

(11) **EP 0 810 960 B1**
(45) Date of publication and mention of the grant of the patent: **02.06.1999**
(21) Application number: 95915370.1
(22) Date of filing: 02.03.1995
(51) Int. Cl.: B65D 85/66, B65D 19/44

(54) **REUSABLE CRATE FOR HEAVY ROLLS OF SHEET MATERIAL**
WIEDERVERWENDBARE KISTE FÜR SCHWERE FOLIENROLLEN
CAISSE REUTILISABLE POUR LOURDS ROULEAUX DE MATERIAU EN FEUILLE

(43) Date of publication of application: 10.12.1997
(73) Proprietor: E.I. DU PONT DE NEMOURS AND COMPANY, Wilmington Delaware 19898 (US)
(72) Inventor: GEUNS, Willy, B-3723 Kortessem (BE); POTARGENT, Johan, B-3740 Bilzen (BE)
(74) Representative: BROOKES & MARTIN
(86) International application number: US9502632
(87) International publication number: WO9626871

(56) References cited:
- EP-A- 0 482 273
- EP-A- 0 528 408
- FR-A- 2 280 562
- US-A- 5 193 700

## Description

This invention relates to shipping containers and more particularly to shipping containers for rolls of flexible sheet or film material which is reusable.

Shipment of rolls of flexible sheet or film material heretofore has been accomplished using corrugated cardboard cartons. The material is wound around a cylindrical core and is supported at its ends by end plates. A representative container of this type is shown in U.S. Pat. No. 3,710,539. Such cardboard containers, however, can be easily damaged in transport by crushing, thereby damaging the film contained therein. Stacking of multiple containers is generally difficult, due to load constraints on the carton. Too, the cardboard carton is not reusable and cannot be returned. Non-reusable packaging in quantity presents a waste disposal problem and is ecologically undesirable.

Large rolls of pressure-sensitive materials present further difficulties. Such rolls are typically stored and transported in wooden containers, in which the roll is fixed by wedge-like devices of formed polystyrene or comparable non-flexible material. Such wooden containers are also not reusable and consequently are expensive and add to the waste disposal problem.

EP 482 273 describes a crate for containing a heavy roll of sheet material according to the first part of claim 1. The crate comprises a frame having a corner members. The corner members comprise upper sections removably received in lower sections. Walls and a solid support for supporting the roll are connected to the frame.

According to the invention there is provided a crate for containing a heavy roll of sheet material the crate comprising a frame having corner members comprising upper and lower sections pivotally joined by a pin received in a cavity so that the upper section can be folded inwardly for collapsing the crate for storage, walls and a solid support for supporting the roll are connected to the frame.

The cavity can be a slot formed in the lower section.

An upper section can be provided with extending means having a cutaway notch engaging a lower section when the upper section is in an open position.

Front and back walls can be hinged to a bottom support of the frame so that the front and back walls can be stored beneath the solid support.

The solid support can comprise metal or wood and may have a layer of foam positioned as to be in contact with the roll.

### DESCRIPTION OF THE DRAWINGS

FIG. 1 is a perspective view of a preferred embodiment of the reusable crate container;

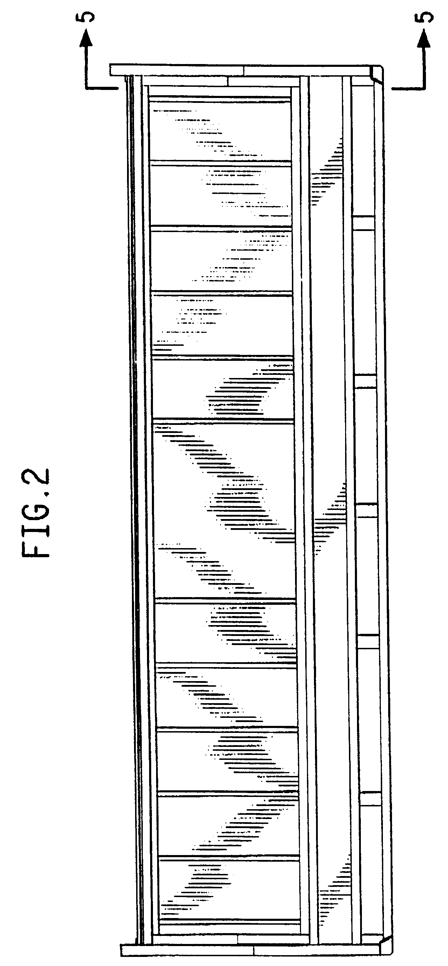

FIG. 2 is a view of the crate container shown in FIG. 1 partially disassembled taken on line 5-5;
FIG. 3 is a front end view of the crate container shown in FIG. 1;
FIG. 4 is a back end view of the crate container in a collapsed position shown in FIG. 1;
FIG. 5 is a side elevation of the crate container shown in FIG. 1;

### DETAILED DESCRIPTION OF THE INVENTION

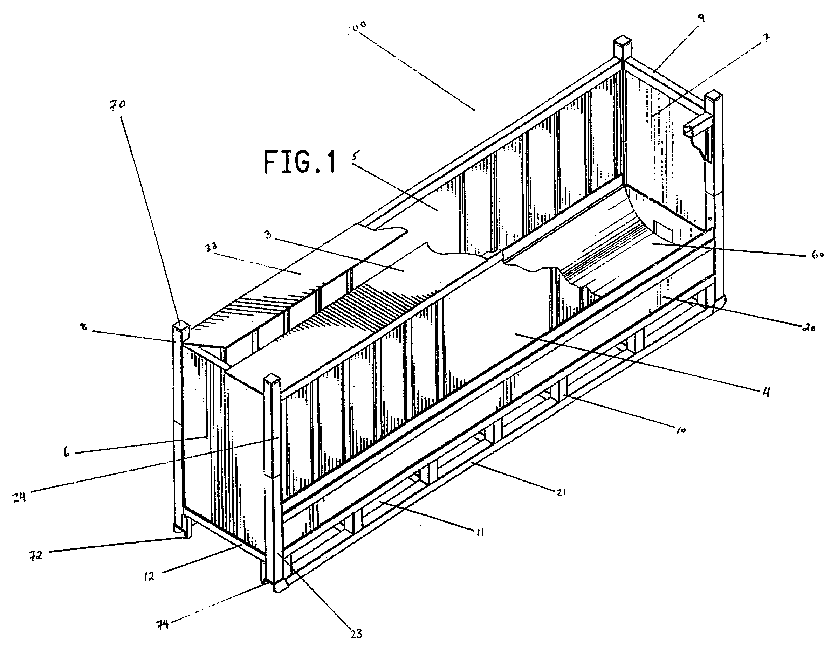

FIG. 1 is the perspective view of crate 100 of the present invention with partial cutaway. Crate 100 comprises a frame, consisting of front wall 6, opposite back wall 7, lateral walls 4 and 5 opposite each other top panels 3 and 3a, bottom support 15 and solid support 60. In each corner of this rectangular frame are corner members 8. Near the top of each corner member 8 is a horizontal arm 9, which connects each respective corner member Sidebar 20 is attached to corner members 8 and runs the length of lateral walls 4 and 5.

Crate 100 can be constructed of any suitable material, such as metal, wood, high density plastic or composite materials. Preferably the frame is made with metals, such as galvanized steel, cast steel, aluminum or other suitable alloys. Preferably, a material whose characteristics which would allow stacking of multiple crates is selected. Individual components of the crate are connected to each other by known methods in the art, such as welding or bolting.

Projecting vertically from sidebar 20 are legs 10 which are interconnected to horizontal bar 21 which is attached to corner member 8. Legs 10 are positioned such that openings 11 are available for handling the crate by means of a fork lift or other handling device. Lateral walls 4 and 5 may be constructed of a single panel. Alternatively, lateral walls 4 and 5 may consist of one or more overlapping or adjacent panels. Such panels may be constructed of any suitable material, such as aluminum, steel, plastics or wood.

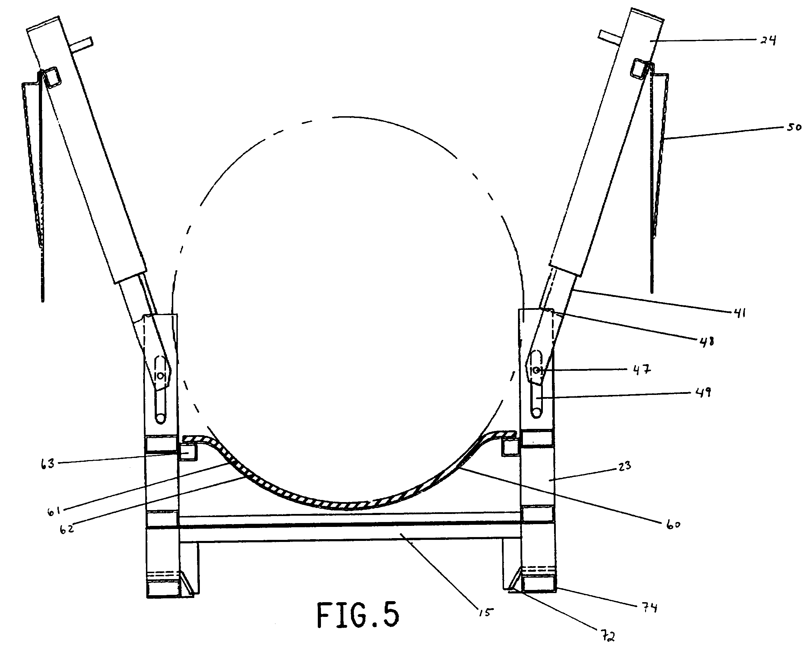

Corner members 8 comprise two parts, lover section 23 and upper section 24. Extending means 41, FIG. 5, has a cut-away notch 48 near or at the mid-point of the length of extending means 41. Upper section 24 can be vertically elevated away from lower section 23 and positioned in an obliquely-opened position. Pin 47 is fixed in extending means 41 at or near the lower section of extending means 41. When upper section 24 is lifted vertically and placed in the oblique position, pin 47 moves within cavity 49, generally elliptical in shape, and is engaged by the edges of cavity 49 at or near the upper edges of cavity 49 to provide stabilization to upper section 24 in the open position.

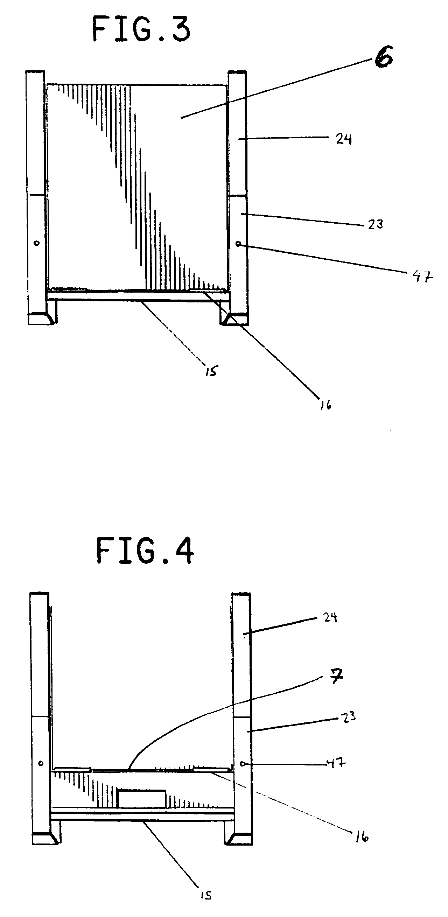

Crate 100 can be collapsed when empty. Front wall 6 and back wall 7 are connected to bottom support 15 by hinges 16 as shown in FIG. 3. With upper section 24 in the oblique open position, lateral walls 4 and 5 can be outwardly positioned parallel to bottom support 15. 60. FIG. 4 shows back wall 7 in the collapsed position. Upper section 24 can also be folded inwardly for collapsing crate 100 for storage and shipping when empty. Extending means 41 is raised vertically and pivoted around pin 47 inwardly such that upper section 24 will lie horizontally above solid support means 60.

Top panels 3 and 3a, FIG. 1, are shaped to overhang front wall 6 and back wall 7 to be supported by the top edge of said walls when top panels 3 and 3a are in the closed position. Each top panel 3, 3a is attached to a corresponding lateral wall by means of hinges, not shown, or other suitable means, such as to allow top panels 3, 3a to be opened away from the closed position. Chain 50, FIG. 5, can be linked together when top panels 3, 3a are closed into a horizontal position as to prevent said panels from opening during transport and handling.

Solid support 60, FIG.5, holds the roll contained within crate 100. Solid support 60 is composed of a suitable solid material which will support the weight of the roll without deformation, such as but not limited to metals, metal alloys, hardened plastics and solid foams. On top of solid support 60 is carrying plate 61 with foam layer 62 in a position of contact with the roll placed therein. Carrying plate 61 is connected to lateral bar 63 which runs lengthwise of sidebar 20.

Crate 100 can also be stacked. Opening 70, FIG. 1, is the cross-section of vertical upper section 24 which fits into the cross-sectional opening of a corresponding lower cross-sectional opening of another crate so as to enable stacking of fully open crates. Edge plate 72 attached to the bottom end of lower section 23 stabilizes said section 23 when it is placed onto opening 70 of a second crate positioned below it.

## Claims

1. A crate (100) for containing a heavy roll of sheet material, the crate comprising a frame having corner members, comprising upper (24) and lower (23) sections, walls (4,5) connected to the frame and a solid support (60) for supporting the roll carried by the frame.
characterised in that
upper (24) and lower (23) sections are pivotally joined by a pin (47) received in a cavity (49) so that the upper section can be folded inwardly for collapsing the crate for storage.

2. A crate (100) as claimed in claim 1 wherein the cavity (49) is a slot formed in the lower section.

3. A crate (100) as claimed in claim 2 wherein the upper section (24) is provided with extending means (41) having a cutaway notch (48) engaging lower section (23) when the upper section (24) is in an open position.

4. A crate (100) as claimed in any one of the preceding claims wherein front (6) and back (7) walls are hinged to bottom support (15) of the frame so that front (6) and back (7) walls can be stored beneath the solid support (60).

5. A crate as claimed in any one of the preceding claims wherein said solid support (60) for retaining solid roll comprises metal or wood.

6. A crate as claimed in claim 5 wherein said solid support (60) has a layer of foam positioned as to be in contact with said roll.

## Patentansprüche

1. Kiste (100) zur Aufnahme einer schweren Rolle von Folienmaterial, umfassend einen Rahmen mit Eckelementen, obere (24) und untere (23) Abschnitte umfassend, Wände (4, 5), die mit dem Rahmen verbunden sind, und einen massiven Träger (60) zum Stützen der vom Rahmen getragenen Rolle,
dadurch gekennzeichnet daß
obere (24) und untere (23) Abschnitte mit Hilfe eines in einem Hohlraum (49) aufgenommenen Stiftes (47) schwenkbar verbunden sind, so daß der obere Abschnitt nach innen gefaltet werden kann, um die Kiste zwecks Lagerung zusammenzuklappen

2. Kiste (100) nach Anspruch 1, in welcher der Hohlraum (49) ein im unteren Abschnitt gebildeter Schlitz ist.

3. Kiste (100) nach Anspruch 2, in welcher der obere Abschnitt (24) mit einer Auszieheinrichtung (41) versehen ist, die eine weggeschnittene Kerbe (48) aufweist, die in den unteren Abschnitt (23) eingreift, wenn sich der obere Abschnitt (24) in einer offenen Stellung befindet.

4. Kiste (100) nach irgendeinem der vorhergehenden Ansprüche, in welcher Vorder (6)- und Rück (7)-Wände mit einem Scharnier am unteren Träger (15) des Rahmens befestigt sind, so daß die Vorder (6)- und Rück (7)-Wände unterhalb des massiven Trägers (60) aufbewahrt werden können.

5. Kiste nach irgendeinem der vorhergehenden Ansprüche, in welcher der massive Träger (60) zum Rückhalten der massiven Rolle Metall oder Holz umfaßt.

6. Kiste nach Anspruch 5, in welcher der massive Träger (60) eine Schaumschicht aufweist, die so positioniert ist, daß sie in Kontakt mit der Rolle steht.

## Revendications

1. Caisse à claire-voies (100) pour contenir un lourd rouleau de matériau en feuille, laquelle caisse à claire-voies comprend un châssis présentant des éléments de coin, des sections supérieure (24) et inférieure (23), des parois (4, 5) reliées au châssis et un support solide (60) pour supporter le rouleau porté par le châssis, caractérisée en ce que les sections supérieure (24) et inférieure (23) sont jointes de façon pivotante par une broche (47) qui est logée dans une cavité (49), de sorte que la section supérieure peut être rabattue vers l'intérieur afin d'aplatir la caisse à claire-voies en vue de son stockage.

2. Caisse à claire-voies (100) suivant la revendication 1, dans laquelle la cavité (49) est une fente pratiquée dans la section inférieure.

3. Caisse à claire-voies (100) suivant la revendication 2, dans laquelle la section supérieure (24) est pourvue de moyens d'extension (41) présentant une entaille découpée (48) qui vient en prise avec la section inférieure (23), lorsque la section supérieure (24) se trouve dans une position ouverte.

4. Caisse à claire-voies (100) suivant l'une quelconque des revendications précédentes, dans laquelle des parois avant (6) et arrière (7) sont articulées sur le support de fond (15) du châssis, de telle sorte que les parois avant (6) et arrière (7) peuvent être rangées sous le support solide (60).

5. Caisse à claire-voies suivant l'une quelconque des revendications précédentes, dans laquelle ledit support solide (60) destiné à retenir le rouleau solide est constitué de métal ou de bois.

6. Caisse à claire-voies suivant la revendication 5, dans laquelle ledit support solide (60) comprend une couche de mousse positionnée de manière à entrer en contact avec ledit rouleau.
